# EUROPEAN PATENT APPLICATION

(11) **EP 3 279 070 A1**
(43) Date of publication of application: **07.02.2018**
(21) Application number: 16182241.6
(22) Date of filing: 01.08.2016
(51) Int. Cl.: B62K 19/36, B62J 1/08

(54) **MECHANICAL ADJUSTMENT DEVICE FOR A BICYCLE SEAT**

(71) Applicant: Kind Shock Hi-Tech Co., Ltd., Tainan City 709 (TW)
(72) Inventor: HSU, Jung Yu, TAINAN CITY 709 (TW)
(74) Representative: Cabinet Chaillot

(57) **Abstract**

A bicycle seat adjustment device includes an adjustment device connected to the second end (122) of the inner tube (12) and a first clamp member (21) is fixed to the second end (122). An adjustment rod (22) movably extends through the first clamp member (21) to define an adjustment distance formed between the first and second clamp members (23). An expansion member (24) and a resilient member (25) are mounted to the adjustment rod (22). The expansion member (24) is located in the adjustment distance. The first and second clamp members (21, 23) respectively contact two ends of the expansion member (24) so that the expansion member (24) having its edge (242) contacting the inner periphery of the outer tube (11). A control device is connected to the clamp unit (13) and has a lever (33). The control rod (32) is connected between the lever (33) and the adjustment rod (22). The control rod (32) is pushed by the lever (33) to drive the adjustment rod (22) to move linearly into the inner tube (12).

## Description

### BACKGROUND OF THE INVENTION

### 1. Fields of the invention

The present invention relates to a bicycle seat adjustment device, and more particularly, to a mechanical adjustment device for a bicycle seat.

### 2. Descriptions of Related Art

Bicycles have a seat tube which is located substantially at a central portion of the bicycle and a seat post is movably inserted in the seat tube. A seat is connected to the top of the seat post. The height beyond the seat tube of the seat relates comfort and operation efficiency for the cyclists. The height of the bicycle seat can be adjusted up and down to meet requirements of the cyclists of different heights. The distance from the bicycle seat and the handlebar can be adjusted, and the inclination of the seat can also be adjusted for special needs.

The conventional adjustment devices can be a hydraulic adjustment device, a hybrid adjustment device, and a mechanical adjustment device. The hydraulic adjustment device includes an outer tube and an inner tube located in the seat tube, wherein the inner tube is inserted into the outer tube. The hydraulic adjustment device is cooperated with liquid rooms and paths to achieve the purposes of locked status and adjustable status of the seat. The hybrid adjustment device uses hydraulic and pneumatic parts to achieve the adjustable features between the inner and outer tubes. The mechanical adjustment device changes the relationship between the inner and outer tubes by mechanical method.

For the mechanical adjustment device, a control device or a control device is required, the control device activates the related parts to move so as to adjust the inner tube relative to the outer tube. Most of the adjustment devices are located at the handlebar or a position close to the seat post or the seat tube. The conventional control unit can be a lever-type, a cable control type and an electro-magnetic type. The lever-type control unit has a lever located close to the seat and the lever is operated to generate adjustment of the seat post. The related parts are usually installed to the top of the seat tube. The cable-type control device uses a cable to drive the adjustment device so that the related parts are installed to the lower portion of the seat tube. The electro-magnetic type adjustment device uses a circuit to generate electric energy to drive the adjustment device.

The mechanical adjustment devices may adjust the inner tube by a stage-less way, or the seat post is adjusted between several pre-set positions. The pre-set positions include multiple stop members or units located between the inner tube and the outer tube at even distance so as to position the inner tube at a desired position/height. The stage-less way allows the inner tube to be adjusted at any position relative to the outer tube.

Another positioning unit is required to position the seat post at the seat tube or to position the inner tube at the outer tube. The positioning unit is usually cooperated with engaging device to achieve the desired features.

A mechanical adjustment device known to applicant includes a first support member, a second support member which is slidably relative to the first support member. The first support member is connected to the bicycle frame, and the second support member is connected to another portion of the bicycle frame. The second support member has a retractable portion which is operated between an expansion position and a retraction portion. When the retractable portion is located at the expansion position, the retractable portion is connected to a portion of the first support member. When the retractable portion is located at the retraction portion, the retractable portion is selectively movable relative to the second support member. A maintaining unit has at least portion thereof slidably moving in and moving out relative to the retractable portion. When the maintaining unit is positioned in the interior of the retractable portion, the retractable portion cannot retracts. The maintaining unit is normally compressed such that at least one portion thereof is located in the interior of the retractable portion.

Another mechanical adjustment device includes an outer tube and an inner tube which is movably inserted into the outer tube. The outer tube has multiple grooves defined therein. A base is fixed to the inner tub. A control unit has a control valve, a rod, a piston with stepped outer surface, a bead and a spring, wherein the rod is inserted in the inner tube. The control valve is connected to the base and one end of the control valve is connected to the rod. The piston is fixed to the other end of the control valve. The bead is biased by the spring and protrudes beyond the wall of the inner tube so as to be engaged with one of the grooves of the outer tube and the stepped outer surface of the piston. The spring is mounted to the rod.

Yet another mechanical adjustment device includes a seat post with a quick-release unit on the top thereof so as to be quickly connected to the seat tube. The seat post has multiple stop members and each of the stop members is biased by a spring and protrudes out from the wall of the seat post. The seat tube has a hole so that one of the stop members is engaged with the hole to position the seat post relative to the seat tube. The seat tube has a release member which may push the stop member to be retracted into the hole to release the connection between the seat post and the seat tube.

The above mentioned adjustment devices cannot position the seat post at any desired position relative to the seat tube. In other words, for some cyclists, the pre-set positions do not meet the needs of the cyclists of different heights. Besides, the grooves in the outer tube are difficult to be manufacture. The adjustment device using the piston with stepped outer surface is complicated and the manufacturing cost is high.

The present invention intends to provide a mechanical adjustment device for a bicycle seat which improves the shortcomings mentioned above.

### SUMMARY OF THE INVENTION

The present invention relates to a bicycle seat adjustment device and comprises a seat post assembly having an outer tube and an inner tube which has a first end and a second end. The second end of the inner tube is inserted into the outer tube. The first end of the inner tube extends beyond the outer tube and is connected with a clamp unit which clamps a seat. The clamp unit has a support seat which is fixed to the inner tube.

An adjustment device is connected to the second end and has a first clamp member fixed to the second end of the inner tube. An adjustment rod extends through the first clamp member and is linearly movably relative to the first clamp member. The adjustment rod has an end extending beyond the first clamp member and the adjustment rod is connected with a second clamp member 23. An adjustment distance is formed between the first and second clamp members. An expansion member and a resilient member are mounted to the adjustment rod. The expansion member is located in the adjustment distance. The resilient member provides a force to the adjustment rod to return to the inner tube after the adjustment rod moves outward from the inner tube. The adjustment distance is changed due to movement of the adjustment rod. The first and second clamp members respectively contact two ends of the expansion member within the adjustment distance so that the expansion member has its edge contacting the inner periphery of the outer tube.

A control device is connected to the clamp unit and has a base which is located in the inner tube and connected to the support seat. A control rod extends through the base and the support seat. A lever is pivotably connected to the support seat. The first end of the control rod contacts the lever, and the second end of the control rod is connected to the adjustment rod. The control rod is pushed by the lever to drive the adjustment rod to move linearly into the inner tube. The control rod and the adjustment rod returns by a force from the resilient member.

The primary object of the present invention is to provide a mechanical bicycle seat adjustment device which uses an expansion member cooperated with the control device to adjust the height of the seat in a stage-less way.

Another object of the present invention is to provide a mechanical bicycle seat adjustment device which includes less number of parts and can be assembled quickly. The manufacturing processes are simple and the manufacturing cost is low.

Yet another object of the present invention is to provide a mechanical bicycle seat adjustment device wherein the expansion member is located between the inner tube and the outer tube, and other parts are easily manufactured without need of higher standard of manufacturing.

A further object of the present invention is to provide a mechanical bicycle seat adjustment device which has a rotation unit which controls the control device to precisely control the adjustment of the inner tube. The rotation unit is designed for the cyclists to operate manually.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a cross sectional view of the seat post assembly of the present invention and the bicycle frame;
Fig. 2 is a partially cross sectional view of the seat post assembly of the present invention;
Fig. 3 is an exploded view of the seat post assembly of the present invention;
Fig. 4 is a side cross sectional view of the seat post assembly of the present invention;
Fig. 5 is a cross sectional view of the circled portion in Fig. 4;
Fig. 6 is a perspective view of the expansion member of the seat post assembly of the present invention;
Fig. 7 is a plane view of the expansion member of the seat post assembly of the present invention;
Fig. 8 is a cross sectional view of the seat post assembly of the present invention, wherein the lever is pivoted upward;
Fig. 9 is a cross sectional view of the circled portion in Fig. 8;
Fig. 10 is a cross sectional view of the seat post assembly of the present invention, wherein the inner tube is lifted;
Fig. 11 is a cross sectional view of the seat post assembly of the present invention, wherein the lever is pivoted downward;
Fig. 12 is a cross sectional view of the seat post assembly of the present invention, wherein a tool is used to operate the rotation unit;
Fig. 13 is a cross sectional view of the seat post assembly of the present invention, wherein the lever is pivoted upward, and
Fig. 14 is a cross sectional view of the circled portion in Fig. 13.

### DETAILED DESCRIPTION OF THE PREFERRED EMBODIMENT

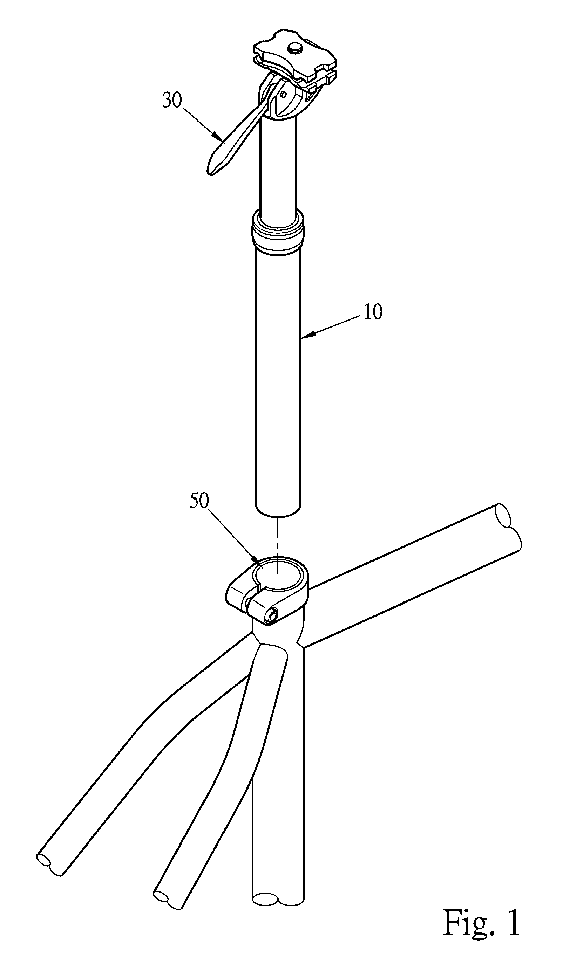

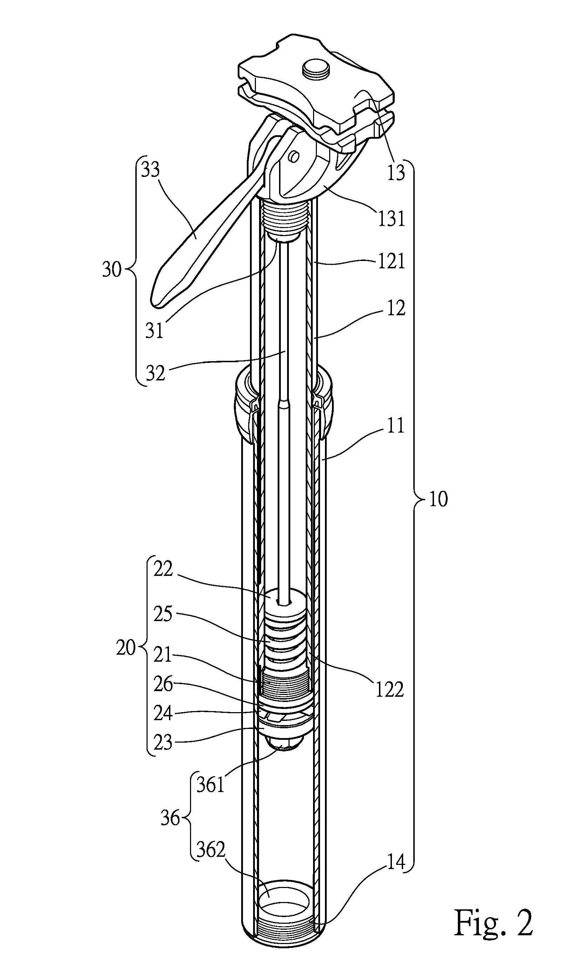

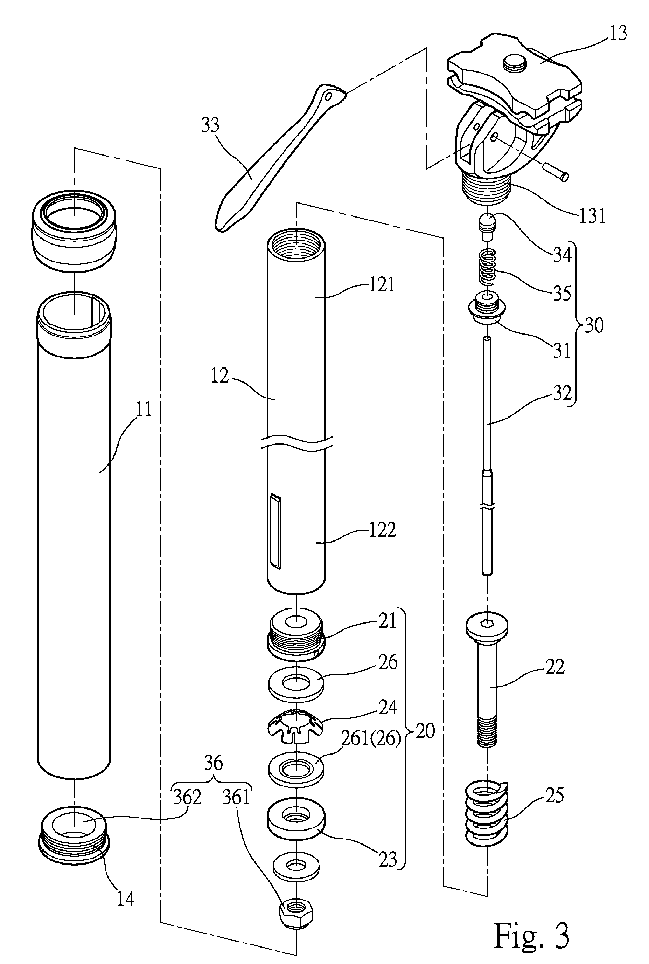

Referring to Figs. 1 to 3, the bicycle seat adjustment device of the present invention comprises a seat post assembly 10 having an outer tube 11 and an inner tube 12 which has a first end 121 and a second end 122. The second end 122 of the inner tube 12 is inserted into the outer tube 11. The first end 121 of the inner tube 12 extends beyond the outer tube 11 and is connected with a clamp unit 13 which clamps a seat. The clamp unit 13 has a support seat 131 which is fixed to the inner tube 12. An end member 14 is connected to the lower end of the inner tube 12.

An adjustment device 20 is connected to the second end 122 and has a first clamp member 21 fixed to the second end 122 of the inner tube 12. An adjustment rod 22 extends through the first clamp member 21 and is linearly movably relative to the first clamp member 21. The adjustment rod 22 has an end extending beyond the first clamp member 21 and the end beyond the first clamp member 21 is connected with a second clamp member 23. An adjustment distance "d" is formed between the first and second clamp members 21, 23. An expansion member 24 and a resilient member 25 are mounted to the adjustment rod 22. The expansion member 24 is located in the adjustment distance "d" and can expand or bounce back. The resilient member 25 provides a force to the adjustment rod 22 to return to the inner tube 12 after the adjustment rod 22 moves outward from the inner tube 12. The adjustment distance "d" being changed due to movement of the adjustment rod 22. The first and second clamp members 21, 23 respectively contact two ends of the expansion member 24 within the adjustment distance "d" so that the expansion member 24 having its edge 242 contacting the inner periphery of the outer tube 11 when the expansion member 24 expands. The adjustment device 20 has two rings 26 which are respectively on two sides of the expansion member 24. When the expansion member 24 expands, one of the rings 26 has one side thereof contacts the first clamp member 21, and the other ring 26 has one side thereof contacts the second clamp member 23. The side that the ring 26 contacts the expansion member 24 has an inclined face 261.

The expansion member 24 is a cone-shaped member and has a hole 241 defined centrally therethrough. The hole 241 is located at the highest position of the expansion member 24 and a one-shaped portion extends from periphery of the hole 241 downward. The cone-shaped portion has an edge 242 at the lower end thereof. The expansion member 24 has multiple first slots 243 which extend from the periphery of the hole 241. Multiple second slots 244 are defined from the edge 242 of the cone-shaped portion and toward the hole 241. The cone-shaped portion has multiple notches 245 are defined in the edge 242 of the cone-shaped portion and toward the hole 241.

A control device 30 is connected to the clamp unit 13 and has a base 31 which is located in the inner tube 12 and connected to the support seat 131. A control rod 32 extends through the base 31 and the support seat 131. A lever 33 is pivotably connected to the support seat 131. A first end of the control rod 32 contacts the lever 33, and a second end of the control rod 32 is connected to the adjustment rod 22. The control rod 32 is pushed by the lever to drive the adjustment rod 22 to move linearly into the inner tube 12. The control rod 32 and the adjustment rod 22 return by a force from the resilient member 25.

The control device 30 has a contact member 34, wherein one end of the contact member 34 is connected to the control rod 32 and the other end of the contact member 34 contacts the lever 33. A spring 35 is mounted to the control rod 32 and the contact member 34 so as to provide a force to the contact member 34 to linearly move away from the inner tube 12 after the contact member 34 moves into the inner tube 12.

The control unit 30 further has a rotation unit 36 which is connected to the adjustment rod 22 that extends beyond the second clamp member 23. The rotation unit 36 has a positioning unit 361 which is threadedly connected to the adjustment rod 22. The second clamp member 23 is located on the top of the positioning unit 361. The adjustment distance "d" changes when rotating the positioning member 361 relative to the adjustment rod 22. The end member 14 has a passage 362 defined central therethrough. A tool 60 is inserted through the passage 362 and reaches the interior of the outer tube 11 to rotate the positioning member 361.

The control rod 32 is pushed by the lever 33 so as to push the adjustment rod 22 to move linearly toward the inner tube 12. The movement of the adjustment rod 22 is cooperated with the operation of the expansion member 24 to adjust the inner tube 12 in a stage-less way.

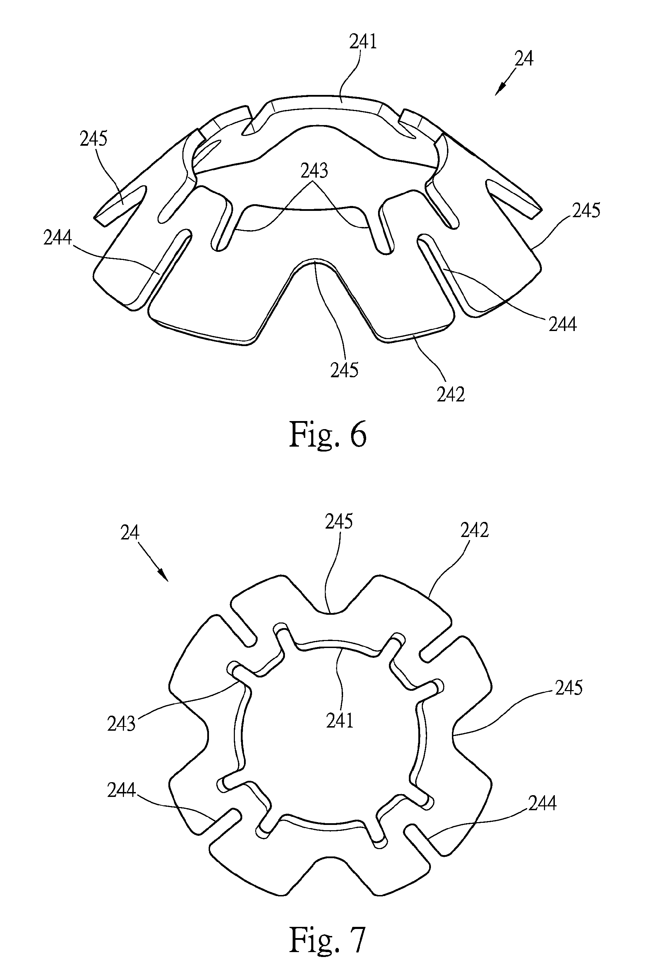

As shown in Figs. 6 and 7, the expansion member 24 is made by flexible material and is a cone-shaped member which has a hole 241 defined centrally therethrough. The hole 241 is located at the highest position of the expansion member 24 and a one-shaped portion extends from periphery of the hole 241 downward. The cone-shaped portion has an edge 242 at the lower end thereof. The expansion member 24 has multiple first slots 243 extending from the periphery of the hole 241. Multiple second slots 244 are defined from the edge 242 of the cone-shaped portion and toward the hole 241. The cone-shaped portion has multiple notches 245 are defined in the edge 242 of the cone-shaped portion and toward the hole 241. The outer tube 11 has bosses extending from the inner periphery thereof so that the edge 242 of the expansion member 24 contacts the bosses.

When assembling, the lever 33 is pivotably connected to the support seat 131, and the contact member 34 and the spring 35 are installed and positioned in the support seat 131 by the base 31. The control rod 32 extends through the base 31 and is connected to the contact member 34. The support seat 131, the lever 33, the contact member 34, the spring 35, the base 31 and the control rod 32 are connected to the first end 12 of the inner tube 12. The adjustment rod 22, the resilient member 25 and the first clamp member 21 are installed in the second end 122 of the inner tube 12. The first clamp member 21 is threadedly connected to the inner tube 12. One end of the adjustment rod 22 is connected to the control rod 32, and the other end of the adjustment rod 22 is exposed a certain length beyond the first clamp member 21. The rings 26, the expansion member 24 and the second clamp member 23 are mounted to the exposed adjustment rod 22. The rotation unit 36 is threadedly connected to the distal end of the adjustment rod 22. The inner tube 12, the adjustment device 20 and the control device 30 are installed in the outer tube 11 by the second end 122 of the inner tube 12 inserted into the outer tube 11. The end member 14 is finally threadedly connected tot eh lower end of the outer tube 11.

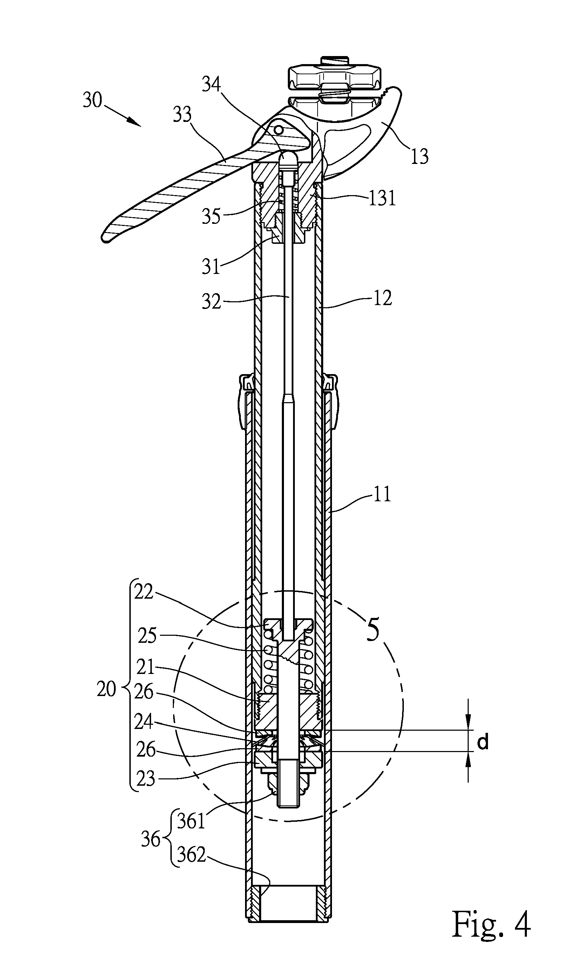

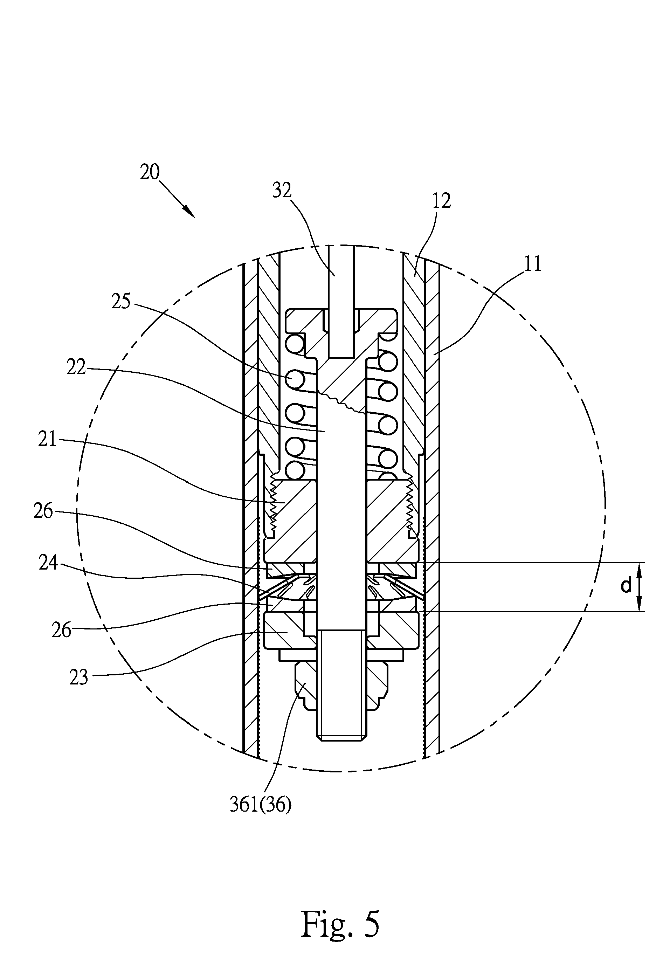

As shown in Figs. 4 and 5, when the adjustment device is not yet operated, the lever 33 is located at the downward position and the resilient member 25 and the spring 35 are not compressed. The distance "d" between the first and second clamp members 21, 23 is smaller than the height of the expansion member 24. The expansion member 24 is clamped between the first and second clamp members 21, 23 or the rings 26, such that the expansion member 24 is expanded and the edge 242 contacts against the bosses in the outer tube 11, the expansion member 24 is positioned.

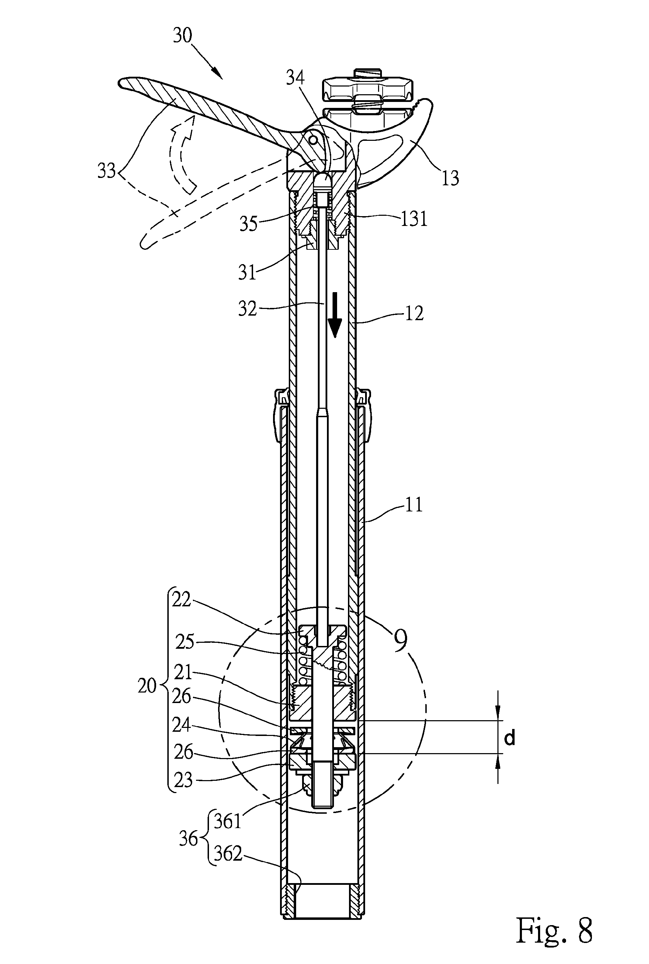

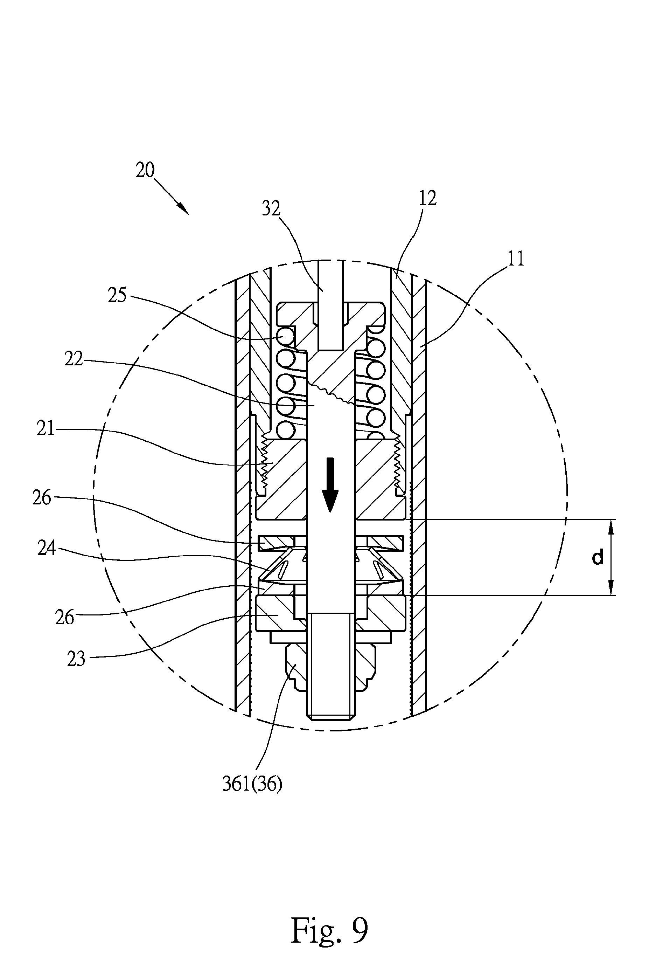

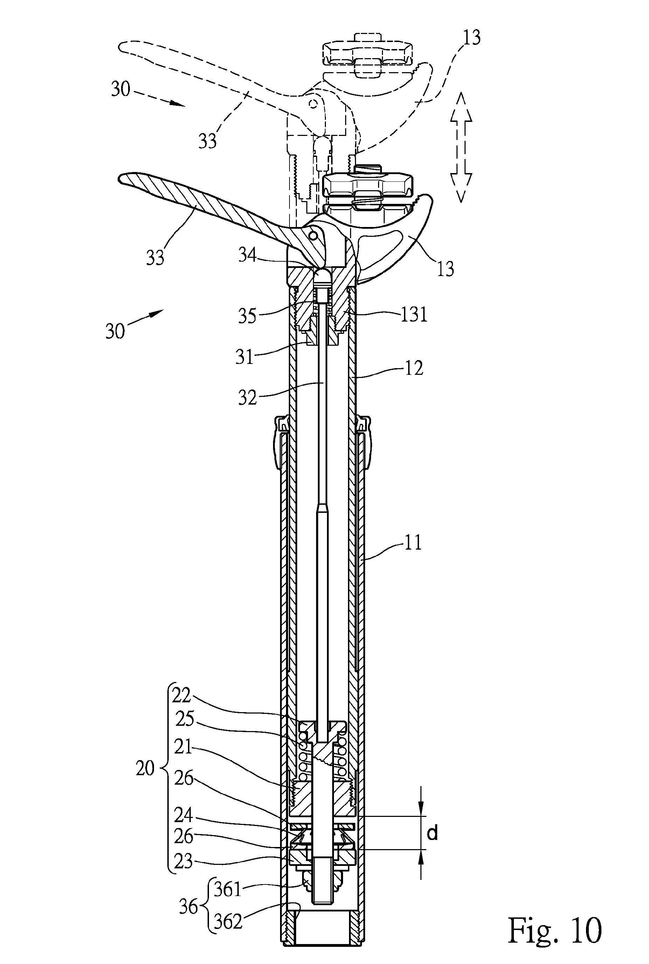

When adjusting the seat to a higher position, as shown in Figs. 8 to 10, pivoting the lever 33 upward and the lever 33 pushes the contact member 34 to move linearly and toward support seat 131. The control re and the adjustment rod 22 are simultaneously moved downward. The resilient member 25 and the spring 35 are compressed, and the distance "d" increased. The force applied to the expansion member 24 is released and the edge 242 is retracted backward and separated from the inner periphery of the inner tube 11. Therefore, the inner tube 12, the adjustment device 20, the control device 30 and the clamp unit 13 are simultaneously and linearly moved in the outer tube 11. The length that the inner tube 12 exposed beyond the outer tube 11 can be adjusted to a desired length.

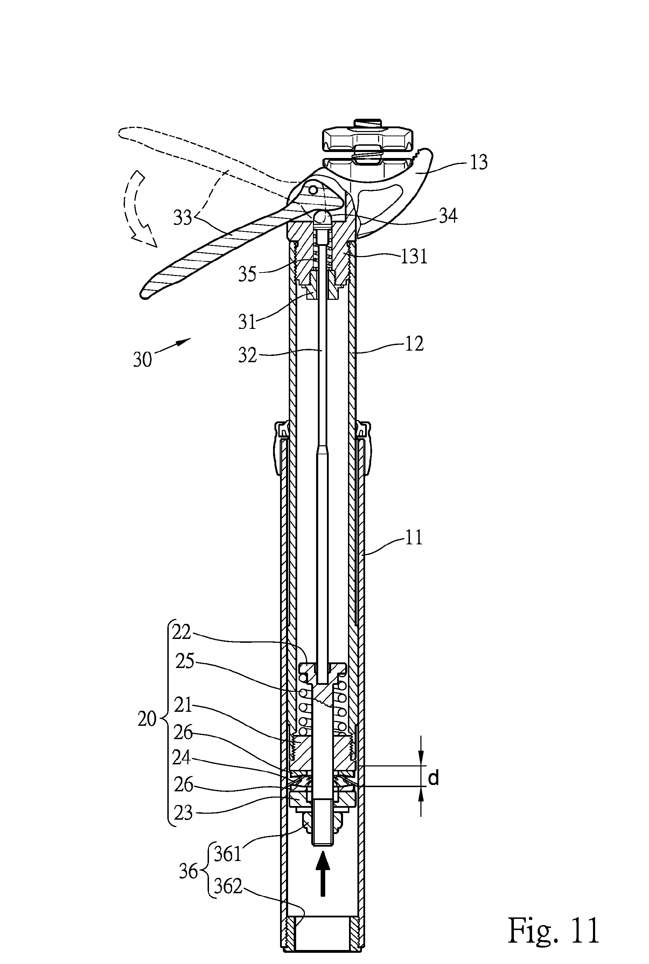

As shown in Fig. 11, after the lever 33 is released, the resilient member 25 and the spring 35 bounce to move the adjustment rod 22, the control rod 32 and the contact member 34 toward the lever 33 to pivot the lever 33 downward. The distance "d" is reduced, and the first and second clamp members 21, 23 compress the expansion member 24. The expansion member 24 expands and the edge 242 contacts against the bosses in the outer tube 11, the expansion member 24 is positioned again.

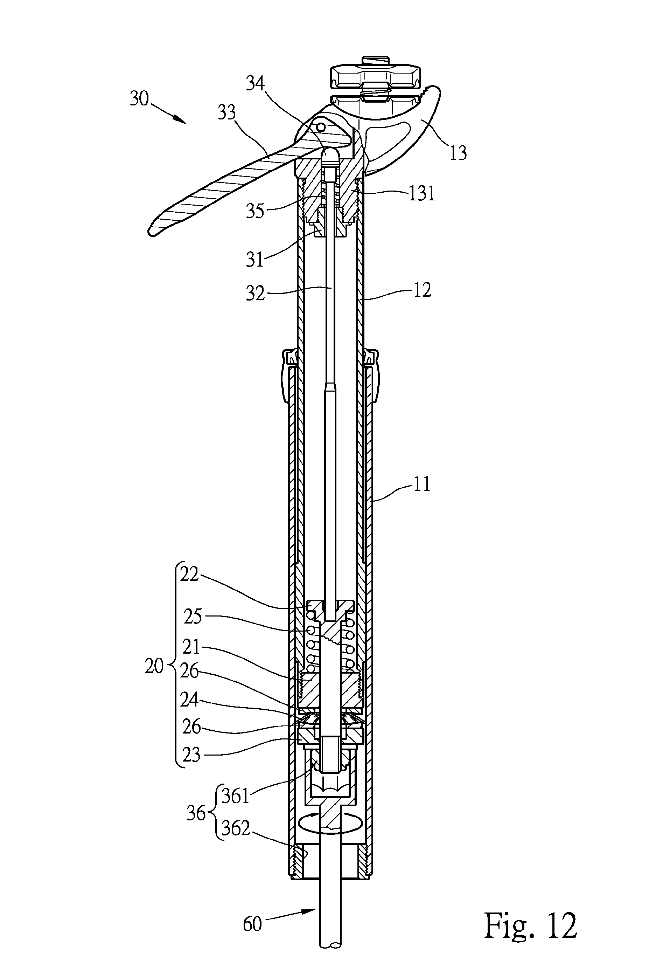

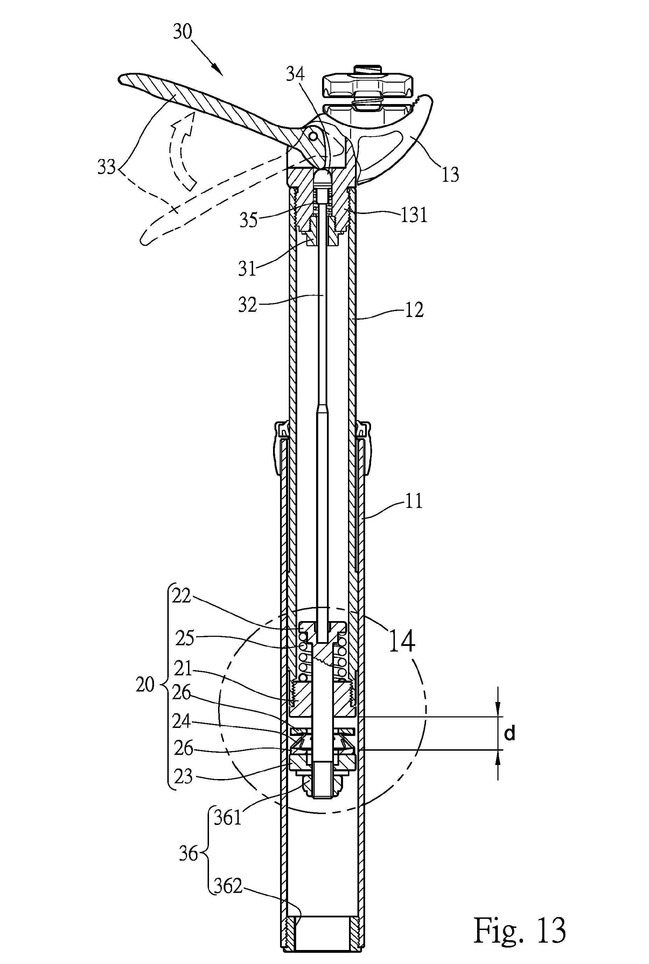

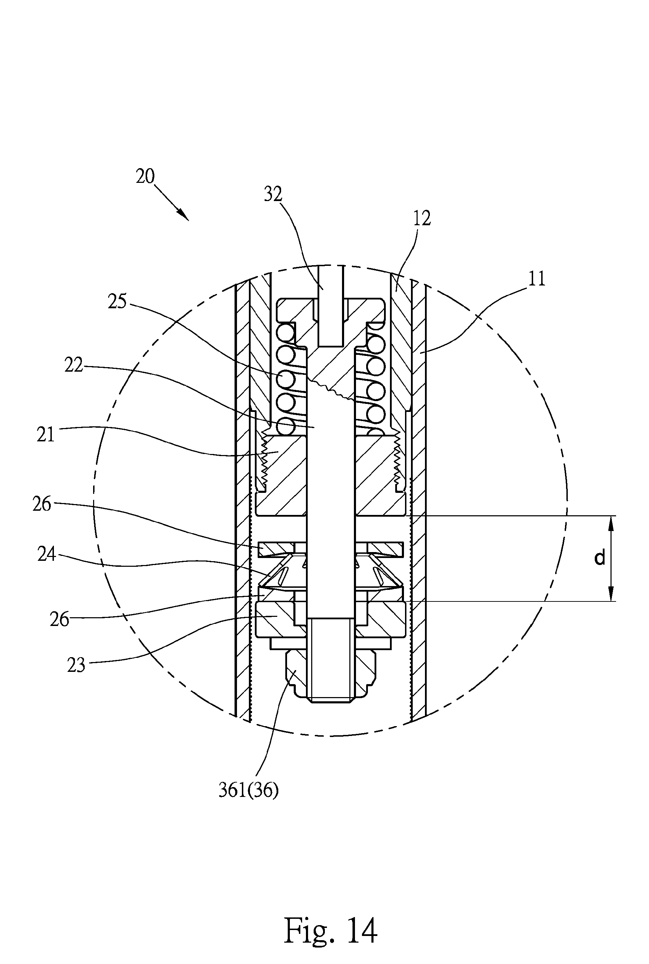

As shown in Figs. 12 to 14, when adjusting the control device 30 to let the cyclists to operate the lever 33 a small angle to activate the movement of the inner tube 12, a tool 60 is inserted through the passage 362 and the end member 14, the tool 60 rotates the positioning member 361 to adjust the position of the positioning member 361 relative to the adjustment rod 22. When the positioning member 361 is adjusted to be more close to the first clamp member 21, the shorter the distance "d" is, and the distance that the contact member 34, the control rod 32 and the adjustment rod 22 move is shorter. Therefore, the lever 33 is only pivoted a smaller angle, the adjustment of the seat is completed. When the positioning member 361 is adjusted to be more farther from to the first clamp member 21, the longer the distance "d" is, and the distance that the contact member 34, the control rod 32 and the adjustment rod 22 move is longer. Therefore, the lever 33 has to be pivoted a larger angle to operate the adjustment.

The rings 26 each have an inclined face 261 which is located corresponding to the each of the two sides of the expansion member 24. When the adjustment device 20 is set, the two inclined faces 261 can adjust the expansion member 24 to be located at central axis of the adjustment device 20 such that the expansion member 24 does not contacts the inner periphery of the outer tube 11.

The adjustment device 20 is operated by way of pressing, when releasing the pressing, the exposed length of the inner tube 12 relative to the outer tube 11 is adjusted. The expansion member 24 expands when it is pressed and bounces back to its original size when the pressure is removed. The rings 26 or the first and second clamp member 21, 23 are pressed, and the lever 33 is operated to move the adjustment rod 22, the distance "d" is changed. The adjustment of the inner tube 12 is in a stage-less mode, the expansion member 24 can contact any position of the inner periphery of the outer tube 11 so that the seat can be adjusted at any desired position.

When maintaining the adjustment device, the inner tube 12 is removed from the outer tube 11, and the clamp unit 13, the base 31 and the first clamp member 21 are loosened, all of the related parts are detached. The maintenance is easy and quick without any special training or requirement.

The adjustment device 20 is operated by way of pressing, the seat post assembly 10, the adjustment device 20 and the control device 30 do not need to be manufactured with higher precision standard so that the manufacturing cost is reduced.

The control device 30 can be adjusted to let the cyclists to operate the lever 33 with a desired sensitivity. A tool 60 is used to adjust the distance "d" between the first and second clamp members 21, 23, and the distance that the contact member 34, the control rod 32 and the adjustment rod 22 is adjusted. The angle to be pivoted of the lever 33 is smaller, the sensitivity of operation is higher.

The present invention can also omit the rings 26, and only uses the first and second clamp members 21, 23 to press the expansion member 24 to achieve the adjustment.

While we have shown and described the embodiment in accordance with the present invention, it should be clear to those skilled in the art that further embodiments may be made without departing from the scope of the present invention.

## Claims

1. A bicycle seat adjustment device comprising:
a seat post assembly having an outer tube and an inner tube which has a first end and a second end, the second end of the inner tube inserted into the outer tube, the first end of the inner tube extending beyond the outer tube and connected with a clamp unit which is adapted to clamp a seat, the clamp unit having a support seat which is fixed to the inner tube;
an adjustment device connected to the second end and having a first clamp member fixed to the second end of the inner tube, an adjustment rod extending through the first clamp member and linearly movably relative to the first clamp member, the adjustment rod having an end extending beyond the first clamp member connected with a second clamp member, an adjustment distance formed between the first and second clamp members, an expansion member and a resilient member mounted to the adjustment rod, the expansion member located in the adjustment distance, the resilient member providing a force to the adjustment rod to return to the inner tube after the adjustment rod moves outward from the inner tube, the adjustment distance being changed due to movement of the adjustment rod, the first and second clamp members respectively contacting two ends of the expansion member within the adjustment distance so that the expansion member having its edge contacting an inner periphery of the outer tube, and
a control device connected to the clamp unit and having a base which is located in the inner tube and connected to the support seat, a control rod extending through the base and the support seat, a lever pivotably connected to the support seat, a first end of the control rod contacting the lever, and a second end of the control rod connected to the adjustment rod, the control rod being pushed by the lever to drive the adjustment rod to move linearly into the inner tube, the control rod and the adjustment rod returning by a force from the resilient member.

2. The bicycle seat adjustment device as claimed in claim 1, wherein an end member connected to a lower end of the inner tube, the control unit having a rotation unit which is connected to the adjustment rod that extends beyond the second clamp member, the rotation unit has a positioning unit which is threadedly connected to the adjustment rod, the second clamp member is located on a top of the positioning unit, the adjustment distance changes when rotating the positioning member relative to the adjustment rod.

3. The bicycle seat adjustment device as claimed in claim 2, wherein the end member has a passage defined central therethrough, a tool is inserted through the passage and reaches an interior of the outer tube to rotate the positioning member.

4. The bicycle seat adjustment device as claimed in claim 1, wherein the adjustment device has two rings which are respectively on two sides of the expansion member, when the expansion member expands, one of the rings has one side thereof contacts the first clamp member, the other ring has one side thereof contacts the second clamp member.

5. The bicycle seat adjustment device as claimed in claim 4, wherein the side that the ring contacts the expansion member has an inclined face.

6. The bicycle seat adjustment device as claimed in claim 1, wherein the control device has a contact member, one end of the contact member is connected to the control rod and the other end of the contact member contacts the lever.

7. The bicycle seat adjustment device as claimed in claim 5, wherein a spring is mounted to the control rod and the contact member so as to provide a force to the contact member to linearly move away from the inner tube after the contact member moves into the inner tube.

8. The bicycle seat adjustment device as claimed in claim 5, wherein a spring is located between the contact member and the base so as to provide a force to the contact member to linearly move away from the inner tube after the contact member moves into the inner tube.

9. The bicycle seat adjustment device as claimed in claim 1, wherein the expansion member is a cone-shaped member and has a hole defined centrally therethrough, the hole is located at a highest position of the expansion member and a one-shaped portion extends from periphery of the hole downward, the cone-shaped portion has an edge at the lower end thereof.

10. The bicycle seat adjustment device as claimed in claim 8, wherein the expansion member has multiple first slots which extend from a periphery of the hole, multiple second slots defined from the edge of the cone-shaped portion and toward the hole.

11. The bicycle seat adjustment device as claimed in claim 8, wherein the cone-shaped portion has multiple notches defined in the edge of the cone-shaped portion and toward the hole, the outer tube has bosses extending from the inner periphery thereof so that the edge of the expansion member contacts the bosses.
